# EUROPEAN PATENT APPLICATION

(11) **EP 3 703 308 A1**
(43) Date of publication of application: **02.09.2020**
(21) Application number: 18869786.6
(22) Date of filing: 10.09.2018
(51) Int. Cl.: H04L 9/14, G06F 21/60, G06F 21/62

(54) **PORTABLE ELECTRONIC DEVICE AND IC MODULE**

(30) Priority: 25.10.2017 JP 2017206507
(71) Applicant: Kabushiki Kaisha Toshiba, Minato-ku Tokyo 105-0023 (JP); Toshiba Infrastructure Systems & Solutions Corporation, Kawasaki-shi, Kanagawa 212-0013 (JP)
(72) Inventor: FUKUOKA Hiroki, Kawasaki-shi Kanagawa 212-0013 (JP)
(74) Representative: Horn Kleimann Waitzhofer Patentanwälte PartG mbB
(86) International application number: PCT/JP2018/033396
(87) International publication number: WO 2019/082526

(57) **Abstract**

A portable electronic device according to one embodiment has a data storage and a processor. The data storage stores encrypted data which is decryptable on the basis of different decryption key information corresponding to a read-out start position. In accordance with a read-out request which is received from an external device and includes at least offset information indicating a read-out start position of the encrypted data stored by the data storage and decryption key information corresponding to the offset information, the processor decrypts data having a prescribed length from the read-out start position indicated by the offset information from among the encrypted data on the basis of the decryption key information, and transmits the decrypted data to the external device.

## Description

### TECHNICAL FIELD

Embodiments of the present invention relate to a portable electronic device and an IC module.

### BACKGROUND ART

In recent years, portable electronic devices such as an IC card in which an integrated circuit (IC) chip is mounted are widely used. For example, genome information as information that needs to pay special attention to dealing according to a revised personal information protection law is included in private information, and thus it is also considered to utilize a portable electronic device such as an IC card in management of such genome information. The genome information has a nature that partly limits required information even in private use without publishing all things. For example, the prescription of drug may be sufficient if there is some information of related to the prescription of drug from among the genome information. However, in a conventional portable electronic device, if access authority is set for each specified file and predetermined conditions such as success in authentication are met, the entire file can be read out using a read-out command. For this reason, in the conventional portable electronic device, there is also a possibility of reading out information some of information required to use the genome information, and security may be reduced.

### Citation List

### Patent Literature

Patent Literature 1: JP 2005-122402A

### SUMMARY OF INVENTION

### TECHNICAL PROBLEM

An object of the present invention is to provide a portable electronic device and an IC module capable of reading out required data while securing security.

### [Solution to Problem]

A portable electronic device of an embodiment has a data storage and a processor. The data storage stores encrypted data which is decryptable on the basis of different decryption key information corresponding to a read-out start position. In accordance with a read-out request which is received from an external device and includes at least offset information indicating a read-out start position of the encrypted data stored by the data storage and decryption key information corresponding to the offset information, the processor decrypts data having a prescribed length from the read-out start position indicated by the offset information from among the encrypted data on the basis of the decryption key information, and transmits the decrypted data to the external device.

### BRIEF DESCRIPTION OF DRAWINGS

Fig. 1 is an external view illustrating an example of an IC card of a first embodiment.
Fig. 2 is a view illustrating an example of a hardware constitution of the IC card of the first embodiment.
Fig. 3 is a block diagram illustrating an example of a functional constitution of the IC card of the first embodiment.
Fig. 4 is a view illustrating an example of a data format of a partial read-out command of the first embodiment.
Fig. 5 is a view illustrating an example of encryption processing of genome information of the first embodiment.
Fig. 6 is a flow chart illustrating an example of processing of the partial read-out command of the first embodiment.
Fig. 7 is a view illustrating an example of the processing of the partial read-out command of the first embodiment.
Fig. 8 is a view illustrating an example of a data format of a partial read-out command of a second embodiment.
Fig. 9 is a flow chart illustrating an example of processing of the partial read-out command of the second embodiment.
Fig. 10 is a view illustrating an example of the processing of the partial read-out command of the second embodiment.
Fig. 11 is a view illustrating an example of encryption processing of genome information of a third embodiment.
Fig. 12 is a flow chart illustrating an example of processing of the partial read-out command of the third embodiment.
Fig. 13 is a view illustrating an example of the processing of the partial read-out command of the third embodiment.

### DESCRIPTION OF EMBODIMENTS

Hereinafter, a portable electronic device and an IC module of embodiments will be described with reference to the drawings.

### (First embodiment)

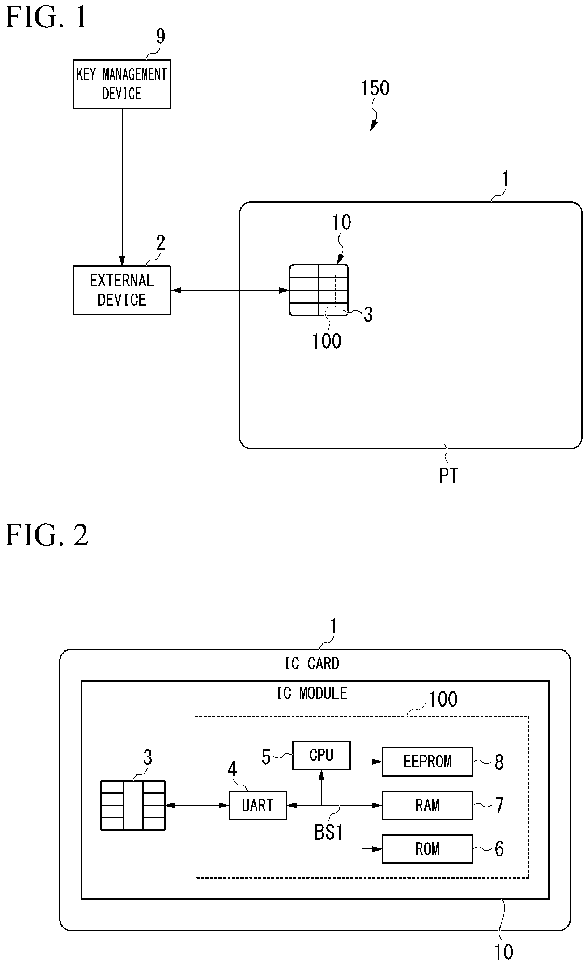

Fig. 1 is an external view illustrating an example of an IC card of the first embodiment. Further, Fig. 1 illustrates a constitutional example of an IC card system 150 of the first embodiment.

As illustrated in Fig. 1, the IC card system 150 includes an IC card 1, an external device 2, and a key management device 9.

The IC card 1 includes an IC module 10. The IC module 10 includes a contact part 3 and an IC chip 100 therein.

The IC card 1 is formed, for instance, by mounting the IC module 10 on a plastic card base PT (an example of a card main body). That is, the IC card 1 includes the IC module 10 and the card base PT in which the IC module 10 is embedded. Further, the IC card 1 can communicate with the external device 2 via the contact part 3.

In the present embodiment, the IC card 1 will be described as an example of the portable electronic device.

The IC card 1 electrically receives a command (a processing request) which, for instance, the external device 2 transmits via the contact part 3, and performs processing (command processing) corresponding to the received command. The IC card 1 electrically transmits a response (a processing response), which is the result of performing command processing, to the external device 2 via the contact part 3. Further, the IC card 1 has a function of storing genome information as private information (secret information), and a function of reading out some of the genome information by means of command processing (processing of a partial read-out command).

Here, the external device 2 is a device that communicates with the IC card 1, and is, for instance, a terminal device that includes a reader/writer device. Further, the genome information is some of information that includes data (genome data) representing a base sequence of a user and is meaningful among sequence data of a genome. Further, the genome data is, for instance, data in which the base sequence is expressed by a string, and the genome information is, for instance, information in which analysis is added to the genome data.

The key management device 9 is a device that manages an encryption key and a decryption key, generates, for instance, an encryption key that encrypts the aforementioned genome information and a decryption key that decrypts the encrypted genome information, and holds the generated encryption and decryption keys. The genome information is so encrypted as to be decryptable on the basis of different decryption key information corresponding to a read-out start position, and is stored in the IC card 1. For this reason, the key management device 9 stores, for instance, the genome information or identification information that identifies the genome information, and the decryption key information that decrypts the encrypted genome information in association with each other. When the aforementioned external device 2 reads partial data of the genome information out of the IC card 1, the key management device 9 provides decryption key information corresponding to offset information to the external device 2.

The IC module 10 includes the contact part 3 and the IC chip 100, and is, for instance, a module that is handled in a form such as a chip on tape (COT) in which a plurality of IC modules 10 are arranged on a tape. In some cases, a single IC module 10 that is extracted and cut from a tape in an individual piece is called a COT.

The contact part 3 has terminals of various signals which the IC card 1 requires for operation. Here, the terminals of various signals include terminals that receive supply of a power-supply voltage, a clock signal, a reset signal, etc. from the external device 2, and a serial data input/output terminal (an SIO terminal) for communicating with the external device 2.

The IC chip 100 is, for instance, a large scale integration (LSI) such as a microprocessor of one chip.

Next, a hardware constitution of the IC card 1 of the present embodiment will be described with reference to Fig. 2.

Fig. 2 is a view illustrating an example of a hardware constitution of the IC card 1 of the present embodiment.

As illustrated in Fig. 2, the IC card 1 includes the IC module 10 that includes the contact part 3 and the IC chip 100. The IC chip 100 includes a universal asynchronous receiver transmitter (UART) 4, a CPU 5, a read only memory (ROM) 6, a random access memory (RAM) 7, and an electrically erasable programmable ROM (EEPROM) 8. Further, the components (4 to 8) are connected via an internal bus BS1.

The UART 4 performs serial data communication with the external device 2 via the aforementioned SIO terminal. The UART 4 outputs data (e.g., 1 byte of data), which is obtained by converting a serial data signal received via the SIO terminal into a parallel data signal, to the internal bus BS1. Further, the UART 4 converts data acquired via the internal bus BS1 into serial data, and outputs the serial data to the external device 2 via the SIO terminal. For example, the UART 4 receives a command from the external device 2 via the SIO terminal. Further, the UART 4 transmits a response to the external device 2 via the SIO terminal.

The CPU 5 executes a program stored in the ROM 6 or the EEPROM 8, and performs various kinds of processing of the IC card 1. The CPU 5 performs, for instance, command processing corresponding to the command which the UART 4 receives via the contact part 3.

The ROM 6 is, for instance, a nonvolatile memory such as a mask ROM, and stores the program for performing the various kinds of processing of the IC card 1 and data such as a command table.

The RAM 7 is, for instance, a volatile memory such as a static RAM (SRAM), and temporarily stores data used when the various kinds of processing of the IC card 1 are performed.

The EEPROM 8 is, for instance, an electrically rewritable nonvolatile memory. The EEPROM 8 stores various data which the IC card 1 uses. The EEPROM 8 stores, for instance, information used for various services (applications) that use the IC card 1.

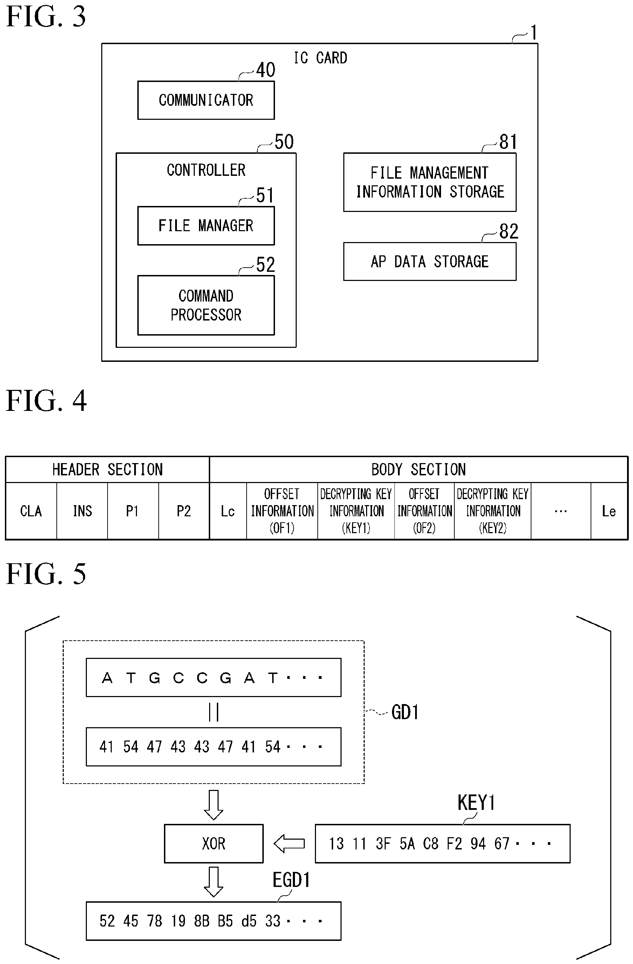

Next, an example of a functional constitution of the IC card 1 according to the present embodiment will be described with reference to Fig. 3.

Fig. 3 is a block diagram illustrating an example of a functional constitution of the IC card 1 of the present embodiment.

As illustrated in Fig. 3, the IC card 1 includes a communicator 40, a controller 50, a file management information storage 81, and an AP data storage 82.

Here, each unit of the IC card 1 illustrated in Fig. 3 is realized using the hardware of the IC card 1 illustrated in Fig. 2.

The communicator 40 is realized, for instance, by the programs stored in the UART 4, the CPU 5, and the ROM 6, and transmits/receives a command and a response to/from, for instance, the external device 2 via the contact part 3. That is, the communicator 40 receives a command (a processing request) requesting prescribed processing from the external device 2, and transmits a response (a processing response) to the command to the external device 2.

The file management information storage 81 is, for instance, a storage made up of the EEPROM 8, and stores management information (e.g., directory information) that manages various files that store data. The file management information storage 81 stores, for instance, file identification information such as a file name and a file ID and an address of a head of a file (hereinafter referred to as a head address of a file) in association with each other. Here, the head address of a file is, for instance, a physical address of the EEPROM 8. In a case where selection of each file or access processing to each file is performed in the IC card 1, the selection of each file or the access processing to each file is performed on the basis of the file management information which the file management information storage 81 stores. Here, the access processing is processing such as reading out, writing, and updating of data.

The application (AP) data storage 82 (an example of a data storage) is, for instance, a storage made up of the EEPROM 8, and stores application data. In the AP data storage 82, files such as a master file (MF), a dedicated file (DF), and an elementary file (EF) are stored in a hierarchical structure.

Further, the AP data storage 82 has a file (e.g., an EF) that stores the aforementioned genome information, and the genome information is encrypted and stored in the file. The genome information is so encrypted as to be decryptable on the basis of the different decryption key information corresponding to the read-out start position such that a person who obtains permission of reading out (e.g., a user of the genome information) reads out required partial data and does not read out data other than that which is required. In this way, the AP data storage 82 stores the encrypted genome information on a file-by-file basis. Further, in the present embodiment, the genome information is encrypted, for instance, by setting a random number sequence having the same size as the genome information as an encryption key and a decryption key, and performing an XOR (exclusive OR) operation on the random number sequence and the genome information. Further, details of encryption processing and decrypting processing of the genome information will be described below.

The controller 50 is realized, for instance, by the CPU 5, the RAM 7, the ROM 6, or the EEPROM 8, and collectively controls the IC card 1. The controller 50 includes a file manager 51 and a command processor 52.

The file manager 51 manages the files inside the AP data storage 82 on the basis of the management information (e.g., directory information) which the file management information storage 81 stores. The file manager 51 manages, for instance, access authority to each file inside the AP data storage 82. When the file manager 51 performs, for instance, access processing to the file, the file manager 51 searches the management information which the file management information storage 81 stores, and specifies a memory location of the file.

The command processor 52 (an example of a processor) performs processing of various commands (command processing) according to a command (a processing request) transmitted from the external device 2 to the IC card 1. The command processor 52 performs command processing, for instance, according to a command received from the external device 2 via the communicator 40. Further, the command processor 52 transmits a response, which is the result of the command processing, to the external device 2 via the communicator 40.

Further, when the command processor 52 reads out, for instance, secret information such as genome information, the command processor 52 reads out some data in a file having, for instance, the genome information, and performs a partial read-out command (an example of a read-out request). Here, the partial read-out command includes offset information and decryption key information as illustrated in Fig. 4.

Fig. 4 is a view illustrating an example of a data format of the partial read-out command of the present embodiment.

As illustrated in Fig. 4, a command telegraphic message of the read-out command includes a header section and a body section. Further, "CLA" and "INS" that are identification information of the command, and "P1" and "P2" of a command parameter are included in the header section.

Further, "Lc," "offset information," "decryption key information,", and "Le" are included in the body section. Here, "Lc" indicates a size of input data in the command, and "Le" indicates a maximum size of output data that is output by the command. Further, "offset information" indicates a read-out start position of encrypted data (e.g., encrypted genome information) in a specified file.

Further, "decryption key information" indicates decryption key information corresponding to the offset information. That is, "decryption key information" indicates decryption key information used for decrypting processing when data having a prescribed unit size (a unit length, for instance, 1 byte) is read out of the read-out start position which the offset information indicates.

Further, in the example illustrated in Fig. 4, a plurality of pieces of "offset information" (OF1, OF2, ···) and a plurality of pieces of "decryption key information" (KEY11, KEY12, ···) are included in the command telegraphic message of the partial read-out command to be able to read out data of a plurality of positions by performing command processing once.

Returning to the description of Fig. 3, the command processor 52 decrypts data having a prescribed length (e.g., 1 byte) from the read-out start position which the offset information indicates among, for instance, the encrypted genome information on the basis of the decryption key information according to the partial read-out command received from the external device 2, and transmit the decrypted data to the external device 2 as a response (a processing response).

For example, the command processor 52 decrypts data (encrypted data) of 1 byte of the read-out start position which the offset information indicates and decryption key information of 1 byte by performing an XOR operation, and transmits the decrypted data (partial data of the genome information) to the external device 2 via the communicator 40 as a response. In this way, the command processor 52 decrypts data having a prescribed length (e.g., 1 byte) from the read-out start position in each prescribed unit size (e.g., 1 byte) on the basis of different decryption key information in each prescribed unit size (e.g., 1 byte), and transmits the decrypted data to the external device 2.

Next, operations of the IC card 1 and the IC card system 150 according to the present embodiment will be described with reference to the drawings.

First, details of encryption processing of the genome information in the present embodiment will be described with reference to Fig. 5.

Fig. 5 is a view illustrating an example of encryption processing of the genome information of the present embodiment.

In Fig. 5, genome information GD1 is data in which a base sequence is written in a text string, and has a data sequence obtained by encrypting each character. Further, an encryption key KEY1 is a random number sequence which the key management device 9 generates. The encryption key KEY1 has the same size as the genome information, and is also used as a decryption key. In Fig. 5, the encrypted data is written as a hexadecimal number.

When the genome information GD1 of a user is registered with the IC card 1, the external device 2 that is an issuing machine performs XOR processing on the encryption key KEY1 which the key management device 9 generates and the genome information GD1 in units of 1 bit (or 1 byte), and generates encrypted genome information EGD1. The external device 2 stores the generated encrypted genome information EGD1 in a prescribed file (e.g., an EF) of the AP data storage 82 using a writing command or an issuing command.

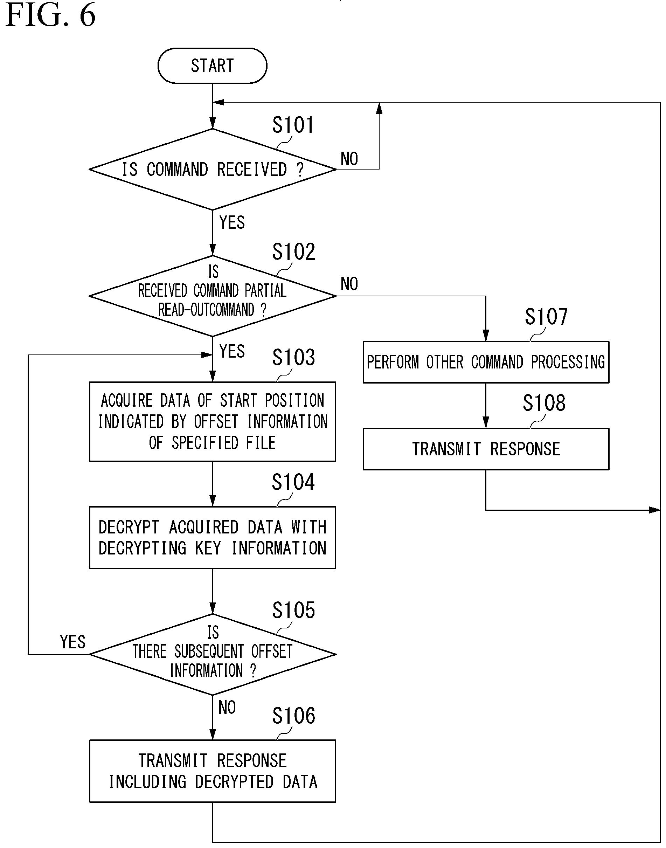

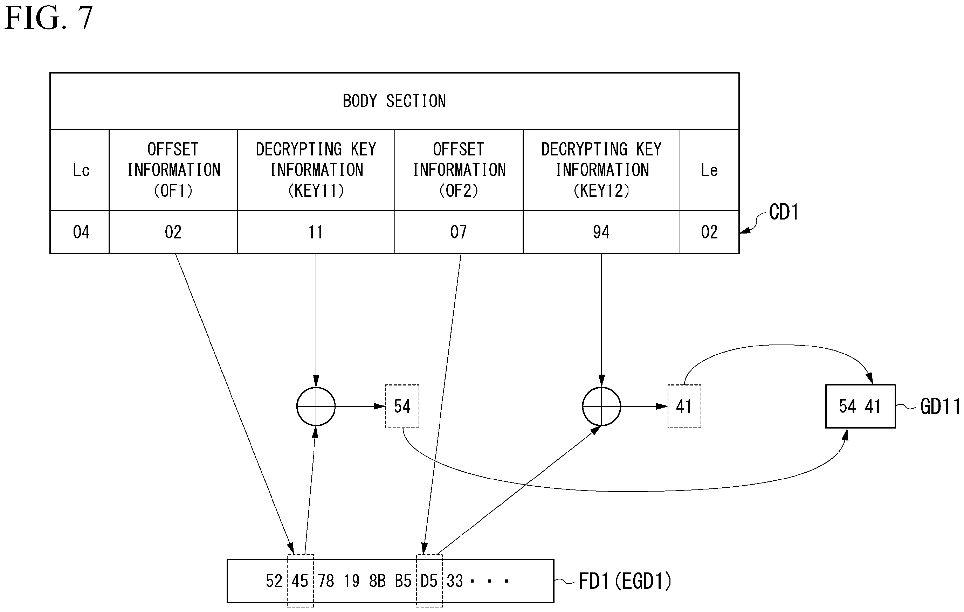

Next, processing of the partial read-out command of the present embodiment will be described with reference to Figs. 6 and 7.

Fig. 6 is a flow chart illustrating an example of processing of the partial read-out command of the present embodiment.

In Fig. 6, it is considered that the encrypted genome information EGD1 as illustrated in Fig. 5 is stored in a prescribed file (e.g., an EF) of the AP data storage 82 of the IC card 1. Further, it is considered that the external device 2 here is, for instance, a terminal device of a user of the genome information, and acquires decryption key information corresponding to partial data of the genome information to be used from the key management device 9.

In Fig. 6, the external device 2 and the IC card 1 are connected via the contact part 3, and in a state in which the IC card 1 is activated, the IC card 1 determines whether or not to receive a command (step S101). That is, the communicator 40 of the IC card 1 determines whether or not to receive a command from the external device 2 via the UART 4. In a case where the communicator 40 receives a command (step S101: YES), the communicator 40 advances the processing to step S102. Further, in a case where the communicator 40 does not receive a command (step S101: NO), the communicator 40 returns the processing to step S101, and repeats the processing of step S101.

In step S102, the command processor 52 of the IC card 1 determines whether or not the received command is a partial read-out command. The command processor 52 determines whether or not the received command is a partial read-out command on the basis of, for instance, "CLA" and "INS" of a received command telegraphic message. In a case where the received command is a partial read-out command (step S102: YES), the command processor 52 advances the processing to step S103. Further, in a case where the received command is not a partial read-out command (step S102: NO), the command processor 52 advances the processing to step S107.

In step S103, the command processor 52 acquires data of the read-out start position indicated by the offset information of the specified file. The command processor 52 causes the file manager 51 to specify a memory location of the specified file on the basis of the management information (e.g., directory information) which the file management information storage 81 stores, and acquires the memory location. The command processor 52 specifies the read-out start position from the acquired memory location of the file using the offset information. The command processor 52 reads and acquires, for instance, data of 1 byte of the read-out start position (data of 1 byte of a prescribed position of the encrypted genome information) out of the AP data storage 82.

Next, the command processor 52 decrypts the acquired data with decryption key information (step S104). The command processor 52 performs an XOR operation on the decryption key information (e.g., 1 byte) corresponding to the read-out start position included in the received partial read-out command and the acquired data (e.g., 1 byte), and decrypts the encrypted genome information.

Next, the command processor 52 determines whether or not there is subsequent offset information (step S 105). The command processor 52 checks the received partial read-out command, and determines whether or not there is subsequent offset information. In a case where there is subsequent offset information (step S105: YES), the command processor 52 returns the processing to step S103, and repeats the processing of step S103 to step S105. Further, in a case where there is no subsequent offset information (step S105: NO), the command processor 52 advances the processing to step S106.

In step S106, the command processor 52 transmits a response including the decrypted data (partial data of the genome information) to the external device 2. The command processor 52 transmits a response including, for instance, the decrypted data (partial data of the genome information) and result information (status information SW1 and SW2) to the external device 2 via the communicator 40. After the processing of step S106, the command processor 52 returns the processing to step S101.

Further, in step S107, the command processor 52 performs other command processing.

Next, the command processor 52 transmits the response (step S108). The command processor 52 transmits a response including, for instance, result information of the other command processing to the external device 2 via the communicator 40. After the processing of step S108, the command processor 52 returns the processing to step S101.

Further, Fig. 7 is a view illustrating an example of the processing of the partial read-out command of the present embodiment.

In the example illustrated in Fig. 7, in a partial read-out command CD1, "02" of offset information (OF1) and "07" of offset information (OF2) are assigned. Further, decryption key information (KEY11) corresponding to the offset information (OF1) is "11," and decryption key information (KEY12) corresponding to the offset information (OF2) is "94." In Fig. 7, each piece of data is written as a hexadecimal number. Further, it is considered that the encrypted genome information EGD1 is stored in a file FD1.

In a case where the command processor 52 receives the aforementioned partial read-out command CD1, the command processor 52 reads out data "45" of a second byte of the encrypted genome information EGD1 on the basis of "02" of the offset information (OF1), decrypts the data "45" by XOR processing with "11" of the decryption key information (KEY11), and generates partial data "54" of the genome information. Further, the command processor 52 reads out data "D5" of a seventh byte of the encrypted genome information EGD1 on the basis of "07" of the offset information (OF2), decrypts the data "D5" by XOR processing with "94" of the decryption key information (KEY12), and generates partial data "41" of the genome information.

The command processor 52 sets the decrypted partial data "54" and "41"together as partial data GD11 of the genome information, and transmits a response including the partial data GD11 to the external device 2.

As described above, the IC card 1 (the portable electronic device) according to the present embodiment includes the AP data storage 82 (the data storage) and the command processor 52 (the processor). The AP data storage 82 stores the data (e.g., genome information) that is so encrypted as to be decryptable on the basis of the different decryption key information corresponding to the read-out start position. In accordance with the read-out request received from the external device 2, the command processor 52 decrypts the data having a prescribed length from the read-out start position indicated by the offset information on the basis of the decryption key information from among the encrypted data, and transmits the decrypted data to the external device 2. Here, the read-out request (the partial read-out command) includes at least the offset information that indicates the read-out start position of the encrypted data stored by the AP data storage 82, and the decryption key information corresponding to the offset information.

Thus, the IC card 1 according to the present embodiment can properly read out some of information required to use, for instance, the genome information in order to decrypt and read out required partial data using the decryption key information corresponding to the offset information, and cannot read out information other than the required part of information. Therefore, the IC card 1 according to the present embodiment can read out the required partial data (e.g., partial data of the secret information such as genome information) while securing security.

For example, in the IC card 1 according to the present embodiment, some of information related to the prescription of drug of the genome information (e.g., information having a subtle difference in genetic information between single nucleotide polymorphisms (SNPs) and between individuals) can be read out without disclosing other information.

Further, in the present embodiment, the AP data storage 82 stores the encrypted data which is decryptable on the basis of the different decryption key information in each prescribed unit size (e.g., 1 byte). In accordance with the partial read-out command, the command processor 52 decrypts the data having a prescribed length from the read-out start position in each prescribed unit size (e.g., 1 byte)on the basis of the different decryption key information in each prescribed unit size (e.g., 1 byte), and transmits the decrypted data to the external device 2.

Thus, the IC card 1 according to the present embodiment can easily decrypt the partial data using a prescribed unit size.

Further, in the present embodiment, the AP data storage 82 stores the encrypted data in units of a file (e.g., in units of an EF). In accordance with the partial read-out command, the command processor 52 decrypts the data having a prescribed length from the read-out start position indicated by the offset information on the basis of the decryption key information from among the encrypted data (e.g., genome information) corresponding to the specified file, and transmits the decrypted data to the external device 2.

Thus, the IC card 1 according to the present embodiment facilitates management of the encrypted data (e.g., genome information), and can easily store information other than the encrypted data (e.g., genome information) by changing a format of the file. For this reason, the IC card 1 according to the present embodiment can improve convenience while securing security.

Further, in the present embodiment, the AP data storage 82 stores the data, as the encrypted data, in which the genome information including data indicating a base sequence of a user is encrypted.

Thus, the IC card 1 according to the present embodiment can read out the partial data of the genome information while securing security.

Further, the IC card 1 according to the present embodiment includes the IC module 10 and the card base PT (the card main body) in which the IC module 10 is embedded. The IC module 10 according to the present embodiment include the aforementioned AP data storage 82 (the data storage) and the command processor 52 (the processor).

Thus, the IC module 10 according to the present embodiment can produce the same effects as the aforementioned IC card 1, and read out the required partial data while securing security.

Further, the IC card system 150 according to the present embodiment includes the aforementioned IC card 1, the external device 2, and the key management device9. The external device 2 acquires the decryption key information corresponding to the offset information from the key management device9, transmits the partial read-out command including the offset information and the acquired decryption key information to the IC card 1, and reads out, for instance, the partial data of the genome information.

Thus, the IC card system 150 according to the present embodiment can produce the same effects as the aforementioned IC card 1, and read out the required partial data (e.g., partial data of the genome information) while securing security.

### (Second embodiment)

Next, an IC card 1 according to a second embodiment will be described with reference to the drawings.

In the IC card 1 according to the present embodiment, a modification of the partial read-out command including a data length will be described. Basic components of the IC card 1 according to the present embodiment are the same as in the first embodiment illustrated in Figs. 1 to3, and processing relevant to the partial read-out command is different.

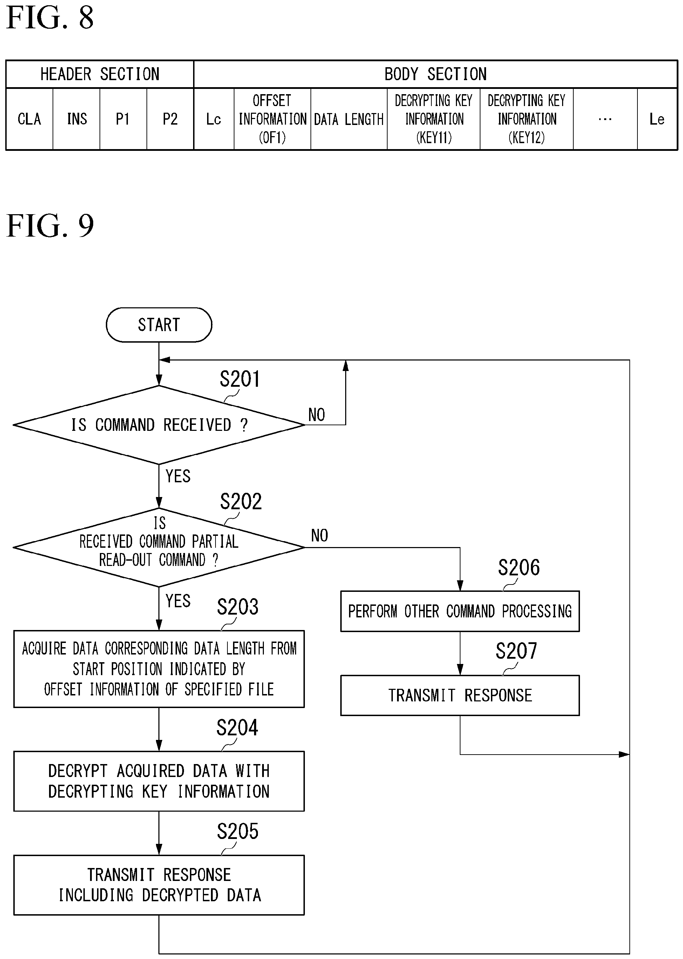

When a command processor 52 in the present embodiment reads out, for instance, secret information such as genome information, the command processor 52 performs a partial read-out command (an example of a read-out request) of reading out some of data in a file having, for instance, the genome information. In accordance with offset information, decryption key information, and the partial read-out command including a data length indicating a length of data read out of a read-out start position, the command processor 52 decrypts the data having a data length from the read-out start position on the basis of the decryption key information, and transmits the decrypted data to an external device 2. Here, as illustrated in Fig. 8, the partial read-out command includes the offset information, the data length, and the decryption key information.

Fig. 8 is a view illustrating an example of a data format of the partial read-out command of the present embodiment.

As illustrated in Fig. 8, a command telegraphic message of the read-out command of the present embodiment includes a header section and a body section, and the header section is the same as that in the aforementioned first embodiment.

Further, "Lc", "offset information", "data length", "decryption key information", and "Le" are included in the body section. Here, "data length" indicates a data length that is read out from the read-out start position. Further, the other "Lc", "offset information", "decryption key information", and "Le" are the same as in the aforementioned first embodiment.

In the present embodiment, with respect to a piece of "offset information," a plurality of pieces of "decryption key information" can be assigned according to a value of "data length."

In the example illustrated in Fig. 8, a piece of "offset information" (OF1), "data length", and a plurality of pieces of "decryption key information"(KEY11, KEY12,···) are included in the command telegraphic message of the partial read-out command to be able to read out data having "data length" corresponding to the plurality of pieces of "decryption key information" through once command processing.

Next, an operation of the IC card 1 according to the present embodiment will be described with reference to the drawings.

Encryption processing of the genome information in the present embodiment is the same as in the aforementioned first embodiment illustrated in Fig. 5, and thus description thereof will be omitted here.

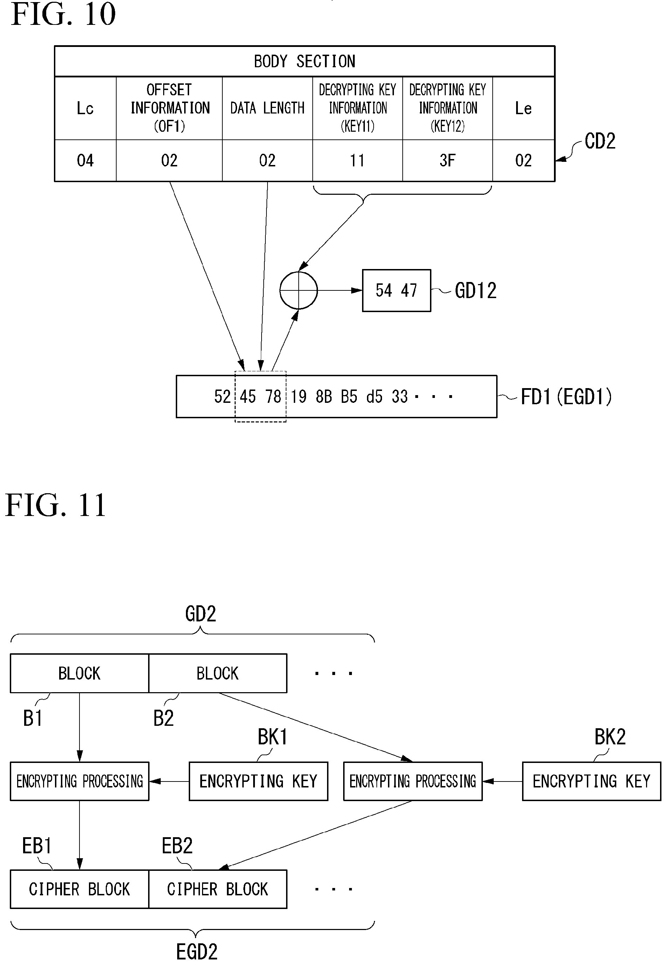

Next, processing of the partial read-out command of the present embodiment will be described with reference to Figs. 9 and 10.

Fig. 9 is a flow chart illustrating an example of processing of the partial read-out command of the present embodiment.

In Fig. 9, it is considered that the encrypted genome information EGD1 as illustrated in Fig. 5 is stored in a prescribed file (e.g., an EF) of an AP data storage 82 of the IC card 1. Further, it is considered that the external device 2 here is, for instance, a terminal device of a user of the genome information, and acquires decryption key information corresponding to partial data of the genome information to be used from a key management device 9.

In Fig. 9, the external device 2 and the IC card 1 are connected via a contact part 3, and in a state in which the IC card 1 is activated, the IC card 1 determines whether a command has been received (step S201). In Fig. 9, processing of step S201 and processing of step S202 are the same as those of steps S101 and S102 illustrated in Fig. 6 above, and thus description thereof will be omitted here. However, in step S202, in a case where the received command is not a partial read-out command (step S202: NO), the command processor 52 advances the processing to step S206.

In step S203, the command processor 52 acquires data corresponding to the data length from the read-out start position indicated by the offset information of the specified file. The command processor 52 causes the file manager 51 to specify a memory location of the specified file on the basis of management information (e.g., directory information) which is stored by the file management information storage 81, and acquires the memory location. The command processor 52 specifies the read-out start position from the acquired memory location of the file from the offset information. The command processor 52 reads and acquires, for instance, the data corresponding to the data length from the read-out start position (data corresponding to a data length of a prescribed position of the encrypted genome information) out of the AP data storage 82.

Next, the command processor 52 decrypts the acquired data with decryption key information (step S204). The command processor 52 performs an XOR operation on the decryption key information corresponding to the data length from the read-out start position included in the received partial read-out command and the acquired data corresponding to the data length, and decrypts the encrypted genome information.

Next, the command processor 52 transmits a response including the decrypted data (partial data of the genome information) to the external device 2 (step S205). The command processor 52 transmits a response including, for instance, the decrypted data (partial data of the genome information) and result information (status information SW1 and SW2) to the external device 2 via the communicator 40. After the processing of step S205, the command processor 52 returns the processing to step S201.

Further, processing of step S206 and processing of step S207 are the same as those of steps S107 and S108 illustrated in Fig. 6 above, and thus description thereof will be omitted.

Further, Fig. 10 is a view illustrating an example of the processing of the partial read-out command of the present embodiment.

In the example illustrated in Fig. 10, in a partial read-out commandCD2, "02" of offset information (OF1) and "02" of a data length (2 bytes) are assigned. Further, in decryption key information corresponding to 2 bytes from the offset information (OF1), decryption key information (KEY11) is "11," and decryption key information (KEY12) is "94." In Fig. 10, each data is written as a hexadecimal number. Further, it is considered that the encrypted genome information EGD1 is stored in a file FD1.

In a case where the command processor 52 receives the aforementioned partial read-out commandCD2, the command processor 52 reads out 2-byte data "4578" from a second byte of the encrypted genome information EGD1 on the basis of "02" of the offset information (OF1) and "02" of the data length, decrypts the 2-byte data "4578" by XOR processing with "113F" of the decryption key information (KEY11 and KEY12), and generates partial data "5447" of the genome information.

The command processor 52 sets 2 bytes of the decrypted partial data"5447" as partial data GD12 of the genome information, and transmits a response including the partial data GD12 to the external device 2.

As described above, in the IC card 1 according to the present embodiment, the command processor 52 decrypts the data having a data length from the read-out start position on the basis of the decryption key information according to the partial read-out command(the read-out request) that includes the offset information, the decryption key information, and the data length that indicates the length of the data read out of the read-out start position, and transmits the decrypted data to the external device 2.

Thus, the IC card 1 according to the present embodiment can efficiently read out required data through one command processing of the partial data that is continuous from the read-out start position indicated by the offset information while securing security. Thus, the IC card 1 according to the present embodiment can improve convenience while securing security.

Further, in the present embodiment, in accordance with the partial read-out command, the command processor 52 decrypts the data corresponding to the data length from the read-out start position in each prescribed unit size (e.g., 1 byte) on the basis of the different decryption key information in each prescribed unit size (e.g., 1 byte), and transmits the decrypted data to the external device 2.

Thus, the IC card 1 according to the present embodiment can easily decrypt the partial data using the prescribed unit size.

### (Third embodiment)

Next, an IC card 1 according to a third embodiment will be described with reference to the drawings.

In the IC card 1 according to the present embodiment, a modification of the partial read-out command corresponding to block encryption will be described. Basic components of the IC card 1 according to the present embodiment are the same as in the first embodiment illustrated in Figs. 1 to 3, and processing relevant to the partial read-out command is different.

In the present embodiment, genome information is encrypted, for instance, by block encryption such as an advanced encryption standard (AES) or a data encryption standard (DES), and is stored in an AP data storage 82.

Further, in accordance with a partial read-out command received from an external device 2, the command processor 52 decrypts, for instance, data having a prescribed length (e.g., 16 bytes) from a read-out start position indicated by offset information from among the encrypted genome information on the basis of decryption key information, and transmits the decrypted data to the external device 2 as a response (a processing response).

For example, a command processor 52 performs decryption of the AES encryption in units of a block using 16 bytes of data (encrypted data) of the read-out start position indicated by the offset information and 16 bytes of decryption key information, and transmits the decrypted data (partial data of the genome information) to the external device 2 via a communicator 40 as a response. Here, the block unit of the AES is 16 bytes. In this way, the command processor 52 decrypts data having a prescribed length (e.g., 1 byte) from the read-out start position in each prescribed unit size (e.g., 1 block) on the basis of different decryption key information in each prescribed unit size (e.g., 1 block), and transmits the decrypted data to the external device 2.

Next, operations of the IC card 1 and an IC card system 150 according to the present embodiment will be described with reference to the drawings.

First, details of encryption processing of the genome information in the present embodiment will be described with reference to Fig. 11.

Fig. 11 is a view illustrating an example of encryption processing of the genome information of the present embodiment.

In Fig. 11, genome informationGD2 is data in which a base sequence is written by a text string, and has a data sequence obtained by encrypting each character. Further, an encryption key BK1 and an encryption key BK2 are encryption keys (served as a decryption key for common key encryption) of the block encryption. The encryption key BK1 and the encryption key BK2 have a size equal to a block length, and are also used as the decryption keys.

When the genome information GD1 of a user is registered with the IC card 1, the external device 2 that is an issuing machine generates genome informationEGD2 that includes decrypted blocks (EB1, EB2, ···) obtained by encrypting blocks (B1, B2, ···) of the genome informationGD2 using the encryption keys (BK1, BK2,···) generated by a key management device 9. The external device 2 stores the generated encrypted genome informationEGD2 in a prescribed file (e.g., an EF) of an AP data storage 82 using a writing command or an issuing command.

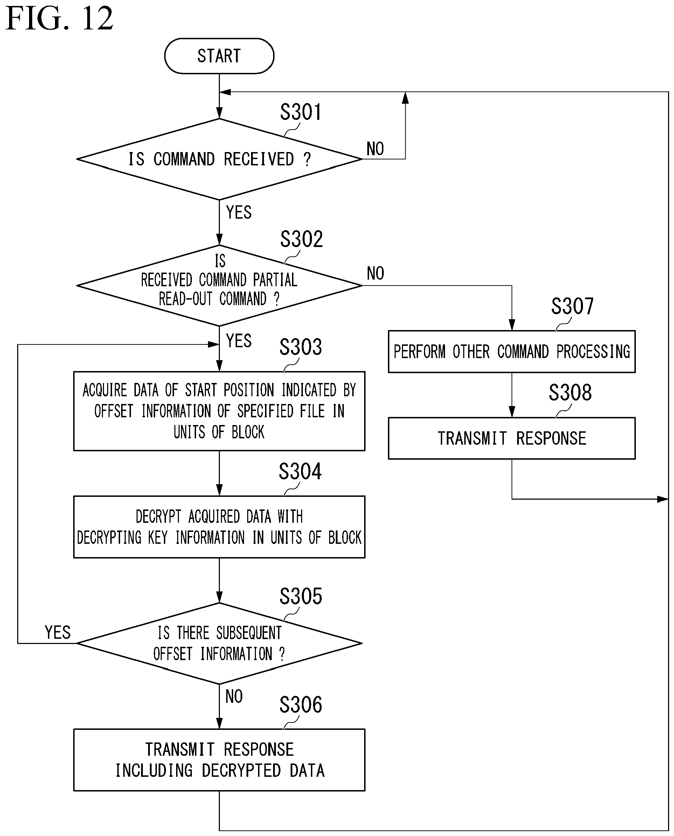

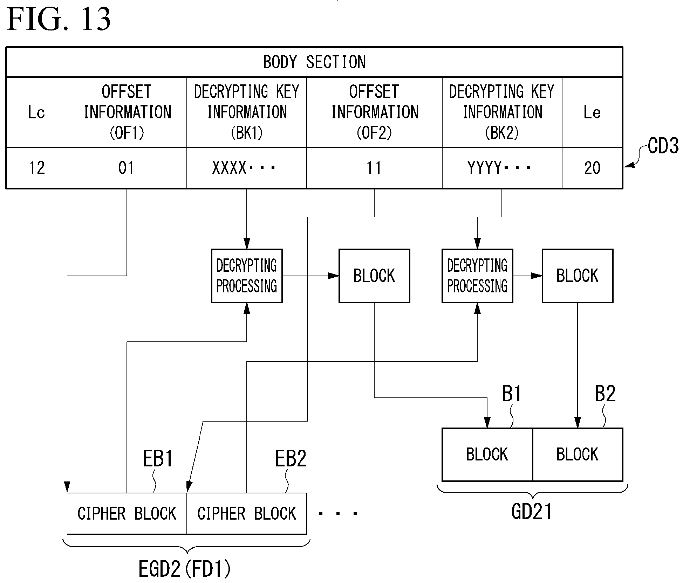

Next, processing of the partial read-out command of the present embodiment will be described with reference to Figs. 12 and 13.

Fig. 12 is a flow chart illustrating an example of processing of the partial read-out command of the present embodiment.

In Fig. 12, it is considered that the encrypted genome information EGD2 as illustrated in Fig. 11 is stored in a prescribed file (e.g., an EF) of the AP data storage 82 of the IC card 1. Further, it is considered that the external device 2 here is, for instance, a terminal device of a user of the genome information, and acquires decryption key information corresponding to partial data of the genome information to be used from the key management device 9.

In Fig. 12, the external device 2 and the IC card 1 are connected via a contact part 3, and in a state in which the IC card 1 is activated, the IC card 1 determines whether or not a command has been received (step 301). In Fig. 12, processing of step S301 and processing of step S302 are the same as those of steps S101 and S102 illustrated in Fig. 6 above, and thus description thereof will be omitted here. However, in step S302, in a case where the received command is not a partial read-out command (step S302: NO), the command processor 52 advances the processing to step S307.

In step S303, the command processor 52 acquires data of the read-out start position indicated by the offset information of the specified file in units of a block. The command processor 52 causes the file manager 51 to specify a memory location of the specified file on the basis of management information (e.g., directory information) which is stored by the file management information storage 81, and acquires the memory location. The command processor 52 specifies the read-out start position from the acquired memory location of the file using the offset information. The command processor 52 reads and acquires, for instance, the data of the block unit of the read-out start position out of the AP data storage 82.

Next, the command processor 52 decrypts the acquired data with decryption key information in units of a block (step S304). The command processor 52 performs decrypting processing of the block encryption on the acquired data (e.g., corresponding to 1 block) using the decryption key information (e.g., corresponding to 1 block) corresponding to the read-out start position included in the received partial read-out command, and decrypts the encrypted genome information.

Next, the command processor 52 determines whether or not there is subsequent offset information (step S305). In a case where there is subsequent offset information (step S305: YES), the command processor 52 returns the processing to step S303, and repeats the processing of steps S303 to S305. Further, in a case where there is no subsequent offset information (step S305: NO), the command processor 52 advances the processing to step S306.

Processing of stepsS306 toS308 is the same as that of steps S106 to S108 illustrated in Fig. 6, and thus description thereof will be omitted here.

Further, Fig. 13 is a view illustrating an example of the processing of the partial read-out command of the present embodiment.

In the example illustrated in Fig. 13, in a partial read-out commandCD3, "01" of offset information (OF1) and "11" of offset information (OF2) are assigned. Further, decryption key information (BK1) corresponding to the offset information (OF1) is "XXXX ···," and decryption key information (BK2) corresponding to the offset information (OF2) is "YYYY···." In Fig. 13, each data other than the decryption key information (BK1 and BK2) of the body section is written as a hexadecimal number. Further, it is considered that the encrypted genome informationEGD2 including the encrypted cipher blocks (EB1, EB2, ···) is stored in a file FD1.

In a case where the command processor 52 receives the aforementioned partial read-out command CD3, the command processor 52 reads out cipher block EB1 of a first byte of the encrypted genome informationEGD2 on the basis of "01" of the offset information (OF1), decrypts the cipher block EB1 in units of a block using the decryption key information BK1, and generates a block B1 that is partial data of the genome information. Further, the command processor 52 reads out cipher block EB2 of a seventeenth byte of the encrypted genome information EGD2 on the basis of "11" of the offset information (OF2), decrypts the cipher block EB2 in units of a block using the decryption key information BK2, and generates a block B2 hat is partial data of the genome information.

The command processor 52 sets the blocks B1 and B2 that are the decrypted partial data together as partial data GD21 of the genome information, and transmits a response including the partial data GD21 to the external device 2.

In the present embodiment, in a case where the partial data to be read out spans two cipher blocks (a plurality of cipher blocks), two pieces of decryption key information (a plurality of pieces of decryption key information) corresponding to the two cipher blocks (the plurality of cipher blocks) are included in the partial read-out command. In this case, the command processor 52 decrypts the partial data in units of a block using the corresponding decryption key information, and transmits the partial data from the read-out start position to the external device 2.

As described above, in the IC card 1 according to the present embodiment, in accordance with the partial read-out command, the command processor 52 decrypts the data corresponding to the data length from the read-out start position in each prescribed unit size (e.g., 1 block) on the basis of the different decryption key information in each prescribed unit size (e.g., 1 block), and transmits the decrypted data to the external device 2.

Thus, the IC card 1 according to the present embodiment can easily decrypt the partial data using the prescribed unit size (the block). Further, the IC card 1 according to the present embodiment can decrypt, for instance, the encrypted data in units of a block, and thus efficiently perform encrypting or decrypting in a case where a quantity of data to be encrypted or decrypted is much.

In each of the above embodiments, the example where the IC card 1 reads out the partial data of the genome information using the partial read-out command has been described, but the embodiments are not limited thereto. For example, if the information (the private information, the secret information, etc.) indicates prescribed information by enumerating letters and needs to acquire some of the required partial data like the genome information, the IC card 1 may apply the processing of the partial read-out command to other information.

Further, in each of the above embodiments, the example where the encryption key and the decryption key use a common key encrypting mode that is common to them has been described, but the embodiments are not limited thereto. The encryption key and the decryption key may use different public key encrypting mode.

Further, in each of the above embodiments, the example where each embodiment is implemented alone has been described, but each embodiment may be performed by combining a part or the whole of each embodiment. For example, in the second embodiment, as in the first and third embodiments, the partial read-out command may be made to include the plurality of pieces of offset information. For example, in the third embodiment, as in the second embodiment, the data length may be applied to the partial read-out command.

Further, in each of the above embodiments, the partial read-out command may be made to be performable after authentication processing such as password authentication or mutual authentication is performed. Further, the partial data read out by the partial read-out command may use the data encrypted using, for instance, secure messaging in the communication between the IC card 1 and the external device 2.

Further, in each of the above embodiments, the example where the offset information is assigned as the read-out start position in units of a byte has been described, but the offset information may be made to be assigned in units of a bit or in units of a word such as 16 bits or32 bits.

Further, the example where the command processor 52 performs the XOR operation on the partial data in units of 1 byte, and transmits partial data of an integer multiple of 1 byte to the external device 2 has been described in the first and second embodiments, but the command processor 52 may perform the XOR operation on the partial data, for instance, in units of 1 bit or in units of 1 word, and transmit partial data of an integer multiple of 1 bit or 1 word to the external device 2.

Further, in the third embodiment, the example where each block is encrypted and decrypted using the different encryption key (decryption key) in each block has been described. However, a plurality of blocks may be encrypted and decrypted by applying a cipher utilization mode such as a cipher block chaining (CBC) mode using one encryption key (one decryption key).

For example, in the case where the CBC mode is applied, the key management device9 manages a decryption key (common to all the blocks), and genome information (a cipher block) that is encrypted by an initialization vector for the CBC mode and the CBC mode. The key management device9transmits one preceding cipher block of the read-out start position indicated by the offset information and a decryption key to the external device 2 as the decryption key information. In a case where the read-out start position is a first block of the genome information, the key management device 9 transmits the initialization vector and the decryption key to the external device 2 as the decryption key information.

The external device 2 transmits a partial read-out command, which includes one preceding cipher block (or the initialization vector) and the decryption key as the decryption key information, to the IC card 1. The command processor 52 of the IC card 1 decrypts the cipher block of the read-out start position indicated by the offset information using one preceding cipher block(or the initialization vector) and the decryption key. To be specific, the command processor 52 performs decrypting processing on a cipher block of a start position using the decryption key, and then performs the XOR operation with one preceding cipher block (or the initialization vector) to decrypt the cipher block.

In this example, the example where the CBC mode is applied to the cipher utilization mode has been described. However, a cipher utilization mode such as, for instance, a propagating cipher block chaining (PCBC) mode, a cipher feedback (CFB) mode, or an output feedback (OFB) mode may be applied. In this case, like the aforementioned CBC mode, additional information such as a decryption key, in initialization vector, or front and rear cipher blocks is included in the decryption key information.

Further, in each of the above embodiments, the example where the IC card 1 communicates with the external device 2 via the contact part 3 has been described, but the IC card 1 may be configured to communicate with the external device 2 via a contactless interface using, for instance, a coil.

Further, in each of the above embodiments, the IC card 1 is configured to include the EEPROM 8 as a rewritable nonvolatile memory, but is not limited thereto. For example, the IC card 1 may include a flash memory, a ferroelectric random access memory (FeRAM), or the like instead of the EEPROM 8.

Further, in each of the above embodiments, the example where the IC card 1 is used as an example of the portable electronic device has been described, but is not limited thereto. The portable electronic device may be, for instance, an electronic device such as an IC tag rather than the card shape.

According to at least one embodiment described above, the IC card 1 has the AP data storage 82 that stores the encrypted data which is decryptable on the basis of the different decryption key information corresponding to the read-out start position, and the command processor 52 that, in accordance with the partial read-out command that includes at least the offset information indicating the read-out start position of the encrypted data and the decryption key information corresponding to the offset information, decrypts the data having a prescribed length from the read-out start position indicated by the offset information from among the encrypted data on the basis of the decryption key information and transmits the decrypted data to the external device 2. Thus, the IC card 1 can read out the required data while securing security.

The embodiments can be realized as follows.

The portable electronic device includes:
a data storage configured to store encrypted data which is decryptable on the basis of different decryption key information corresponding to a read-out start position;
a storage configured to store information; and
a hardware processor configured to execute a program stored in the storage,
wherein, by executing the program, in accordance with a read-out request that is received from an external device and includes at least offset information indicating the read-out start position of the encrypted data stored by the data storage and the decryption key information corresponding to the offset information, the hardware processor decrypts data having a prescribed length from the read-out start position indicated by the offset information from among the encrypted data on the basis of the decryption key information, and
transmits the decrypted data to the external device.

A program for realizing a function of each component which the IC card land the IC card system 150 in the embodiments include may be recorded in a computer readable recording medium, and the program recorded in the recording medium may be read and executed in a computer system. Thus, the processing in each component which the aforementioned IC card 1 and IC card system 150 include may be performed. Here, "reading and executing the program recorded in the recording medium in the computer system" includes installing the program in the computer system. "Computer system" used here is made to include an OS or hardware such as a peripheral device.

Further, "computer readable recording medium" is storage device such as a portable medium such as a flexible disk, a magneto-optic disk, ROM, or CD-ROM, or a hard disk installed in the computer system.

While several embodiments of the present invention have been described, these embodiments are presented by way of example, and are not intended to limit the scope of the invention. These embodiments can be carried out in various other forms, and various omissions, substitutions, and modifications thereof may be made without departing from the spirit of the invention. It is intended that these embodiments and variations thereof are included in the scope and spirit of the present invention, as well as in the inventions set forth in the claims and equivalents thereof.

## Claims

1. A portable electronic device comprising:
a data storage that stores encrypted data which is decryptable on the basis of different decryption key information corresponding to a read-out start position; and
a processor that, in accordance with a read-out request that is received from an external device and includes at least offset information indicating the read-out start position of the encrypted data stored by the data storage and decryption key information corresponding to the offset information, decrypts data having a prescribed length from the read-out start position indicated by the offset information from among the encrypted data on the basis of the decryption key information, and transmits the decrypted data to the external device.

2. The portable electronic device according to claim 1, wherein the processor decrypts the data having a data length from the read-out start position on the basis of the decryption key information according to the read-out request that includes the offset information, the decryption key information, and the data length indicating a length of data read out from the read-out start position, and transmits the decrypted data to the external device.

3. The portable electronic device according to claim 1 or 2, wherein:
the data storage stores the encrypted data to be decryptable on the basis of the different decryption key information in each prescribed unit size; and
the processor decrypts the data having a prescribed length from the read-out start position in each prescribed unit size on the basis of the different decryption key information in each prescribed unit size according to the read-out request, and transmits the decrypted data to the external device.

4. The portable electronic device according to any one of claims 1 to 3, wherein:
the data storage stores the encrypted data in units of a file; and
the processor decrypts data having a prescribed length from the read-out start position indicated by the offset information on the basis of the decryption key information from among the encrypted data corresponding to a specified file according to the read-out request, and transmits the decrypted data to the external device.

5. The portable electronic device according to any one of claims 1 to 4, wherein the data storage stores data in which genome information including data indicating a base sequence of a user is encrypted as the encrypted data.

6. An IC module comprising:
a data storage that stores encrypted data which is decryptable on the basis of different decryption key information corresponding to a read-out start position; and
a processor that, in accordance with a read-out request that is received from an external device and includes at least offset information indicating a read-out start position of the encrypted data stored by the data storage and decryption key information corresponding to the offset information, decrypts data having a prescribed length from the read-out start position indicated by the offset information from among the encrypted data on the basis of the decryption key information, and transmits the decrypted data to the external device.
